# EUROPEAN PATENT APPLICATION

(11) **EP 4 053 007 A1**
(43) Date of publication of application: **07.09.2022**
(21) Application number: 21160308.9
(22) Date of filing: 02.03.2021
(51) Int. Cl.: B62M 3/00, B62J 45/411

(54) **TORQUE SHAFT AND TORSIONAL TORQUE SENSOR COMPRISING SAME**

(71) Applicant: HIDRIA d.o.o., 1000 Ljubljana (SI)
(72) Inventor: MILOST, Uros, 5000 Nova Gorica (SI); BERGINC, Bostjan, 5000 Nova Gorica (SI); KENDA, Jani, 5220 Tolmin (SI); ROVSCEK, Domen, 5216 Most Na Soci (SI)
(74) Representative: BARRE LAFORGUE

(57) **Abstract**

There is disclosed a torque shaft (100) for connecting an input shaft (10) to an output shaft in a pedal assembly which is bound to the pedals of a pedal-assisted electric bicycle. The torque shaft comprises a first axial end portion (110) configured for being tightly fixed to the input shaft; a second axial end portion (130) configured for being tightly fixed to the output shaft; and a resiliently angularly deformable portion (120) extending axially between the first axial end portion (110) and the second axial end portion (130) for transferring torque from the former to the latter, namely from the input shaft to the output shaft. This elastic deformation portion has a given overall axial length and is shaped into a serpentine such that it has a developed deformational length that is longer than said overall axial length. Torque can thus be measured by magnetic flux increase due to angular deformation of the torque shaft, which is nevertheless adapted to the small axial dimensions of the pedal assembly of an e-bike.

## Description

### [Technical Field]

The subject application relates to a torsional torque shaft, and to a torsional torque sensor comprising said torque shaft.

It finds non-limiting applications, for instance, in the pedal assembly of Pedelec bikes (an abbreviation of "pedal electric cycle") or S-Pedelec bikes (standing for "Speed Pedelec" bikes). The invention can further be implemented in any other applications where high torsional deformation is needed and high load requirements are applied.

### [Background Art]

There are two different types, or modes of electric bikes. Contrary to standard throttle-on-demand all-electric bicycles, which have a drive powered by a gas handle without any pedal support, Pedelecs and S-Pedelecs (often known as, and jointly referred to as "e-bikes" in the present specification) are bicycles with pedal assist, namely with automatic pedal support. Pedelecs thus have an electric motor with max. power of 250 W (watt), capable of assisting the rider when pedaling up to 25 kph (kilometer per hour), and offering upon start of cycling a push assistance without pedaling up to 6 kph. S-Pedelecs are a specific kind of Pedelecs which are significantly faster, having a motor with a maximum power of 1000 W and providing assistance to the biker when pedaling up to 25 kph.

In a report entitled « Global e-Bike Market Outlook, 2020-2025 », published in March 2020 and available upon payment from MarketsandMarkets^{™} (see in particular Section 4.1 entitled « *Current Market Scenario* » and Section 4.6 entitled « *Government Regulations, Incentives, and Manufacturing Standards* »), it is noted that several countries, across the world, have published laws pertaining to the use of e-bikes. For countries like the United States and Canada, there are federal regulations governing the safety requirements and standards for manufacturing an e-bike. The European Union has also published regulations for the use and safety of e-bikes, across the region. However, the laws and terminology that classify an e-bike vary from country to country. For instance, the pedal assisted electric bicycles are called as power-assisted bicycles in Canada, same in the United Kingdom, and electric power-assisted cycles in the European Union, etc.

The regulations for Electrically Assisted Pedal Cycles (EAPC) came into force during April 2015. According to the Road Traffic Regulation Act 1984 and Road Traffic Act 1988, there are few requirements for an e-bike to be classified as an e-bicycle and not an e-bike. These requirements are the following:
- the cycle must have pedals to propel same ;
- the electric motor's maximum continuous power should not exceed 250 W ; and,
- the electric motor must not offer electrical assistance beyond a speed of 15.5 mph, and therefore, must cut-off when the cycle attains speeds above this limit.

However, in some jurisdictions, e-bikes are subject to more restrictive rules. In the United States, for instance, there are conflicting regulations at the federal, state, and local levels. For example, in the New York state, electric bikes are considered as motor vehicles and subject to the same laws and penalties as automobiles. In China, local authorities in some cities place limits on the operation of e-bikes, depending on the power rating.

Lawmakers created three categories of electric-assisted bicycles, based on highest speed they can achieve. These categories are as follows:
- Class 1: the motor provides assistance when a rider is pedaling, and stops assisting when the bicycle reaches a speed of 20 mph (miles per hour) and over;
- Class 2: the motor can propel the bicycle without pedaling, but does not assist when the bicycle reaches a speed of 20 mph and over; and,
- Class 3: The motor assists when the rider is pedaling, and stops when the bicycle reaches a speed of 28 mph. It also has a speedometer. In addition, riders must be at least 16 years old to operate a Class 3 e-bike, while there is no age restriction for slower e-bikes of Class 1 and Class 2.

In the global e-bike market, crank/mid drive motors were the first advanced e-bike motors and were developed in Japan, in the early 1990s, by Panasonic and Yamaha. However, currently, these motors continue to capture a significant demand from e-bike manufacturers, as these resulted in providing incredible long-distance traveling efficiency, thereby maintaining a performance that is highly suitable for steep hills when compared to other e-bike motor types. The most popularly used e-bike motor ranged around 250 W - 350 W, in Europe. As e-bikes, that are capped at 250 W and 25 km/h do not require driver license nor dedicated insurance, they have the freedom to commute within the same limits as standard, *i.e.,* non-electric bicycles.

From a more structural standpoint, a pedal-assisted electric bicycle or e-bike, is a bike that has an electric motor aligned to the pedals for providing propulsion assistance to the cyclist. There are two types of electric motors used in e-bikes, namely mid and hub motors. Whatever its type, the electric motor is driven as a function of the magnitude of the mechanical torque which is applied by the rider on the pedals according to the following rule: the higher the torque, the stronger the assistance.

When applied to a solid or tubular shaft member such as a straight bar, torque is a type of moment (also named a "twisting moment") that tends to twist the member about its longitudinal axis. Torque causes shear stresses to develop in the shaft. Assuming the angle of twist is small, however, the length and radius of the shaft member remain the same before and after torsional deformation of said shaft member.

Pedelecs have an integrated torque sensor which can measure the torque that the cyclist is giving to the pedals. The level of electrical assistance is related to that measured torque according to the rule as indicated above, until the maximum tolerated speed has been reached.

To that end, a detection unit of the torque sensor is adapted to cooperate with a torsional torque shaft (sometimes referred to as *"TQsh",* in short, by the one with ordinary skills in the art) arranged in the pedal assembly of the bicycle. This torque shaft has a first end portion which is configured for being tightly fixed to an input shaft of the pedal assembly, and a second end portion which is configured for being similarly fixed to an output shaft of the pedal assembly.

The pedals are coupled to the input shaft, also named the crank shaft of the pedal assembly, for receiving the input torque provided by the pedaling of the cyclist. And the wheels of the bike are coupled to the output shaft, the latter being further driven by an electric motor drive to receive additional torque to assist the cyclist.

It shall be appreciated that, in the above-mentioned application, both the input shaft and the output shaft are rotatable, and so is the torque shaft.

Conventional torque sensors are based on the magnetostriction physical effect, which is a property of magnetic materials that causes them to change their shape or dimensions during the process of magnetization, and reversely. The variation of materials' magnetization due to the applied mechanical strength forces the magneto-strictive strain until reaching its saturation value, commonly referred to by the Greek letter Lambda (A). The reason that a change in the magnetic domains of a material results in a change in the materials dimensions is a consequence of magneto-crystalline anisotropy, that it takes more energy to magnetize a crystalline material in one direction than another.

A drawback of relying on magnetostriction for sensing torque is that it requires magneto-strictive materials for manufacturing the torque shaft, that-is-to-say ferromagnetic materials with specific magnetization properties. Another drawback is the fact that the sensing electronic must be capable of detecting very small magnetic fields, which, in practice, implies that several flux-gate sensors are needed. For these combined reasons, magnetostriction-based torque sensors are relatively expensive, to an extent usually not suitable for the Pedelec segment on mass market.

Further, an offset due to mounting can amount to not less than *ca.* 30% of the output voltage change, which makes it necessary to implement a calibration procedure upon installation of the sensor and the torque shaft within the assembly. Carrying out such calibration procedure at the production site is burdensome, and inconsistent with production of Pedelec bikes on a large, namely industrial scale.

Another known physical principle for measuring torque is based on measuring a magnetic flux increase due to angular torsion of the torque shaft. For instance, torque shafts used in electric power steering for automobile vehicles are usually designed for being used in combination with a detection unit operating based upon this principle of physics.

However, compared to sensors which operate according to the magnetostriction principle, much bigger angular deflection of torque shaft is required (in the range of 0,5 - 1°) for allowing the torque to be measured by magnetic flux increase due to angular deformation of the torque shaft. Measuring range is usually from 0 to 100 Newton Meter (Nm), with an overload which can reach about 600 Nm.

Now, in the foreseen application to torque measurement in a pedal assembly of a Pedelec bike, a limiting factor is the very short available length of torque shafts along their longitudinal axis.

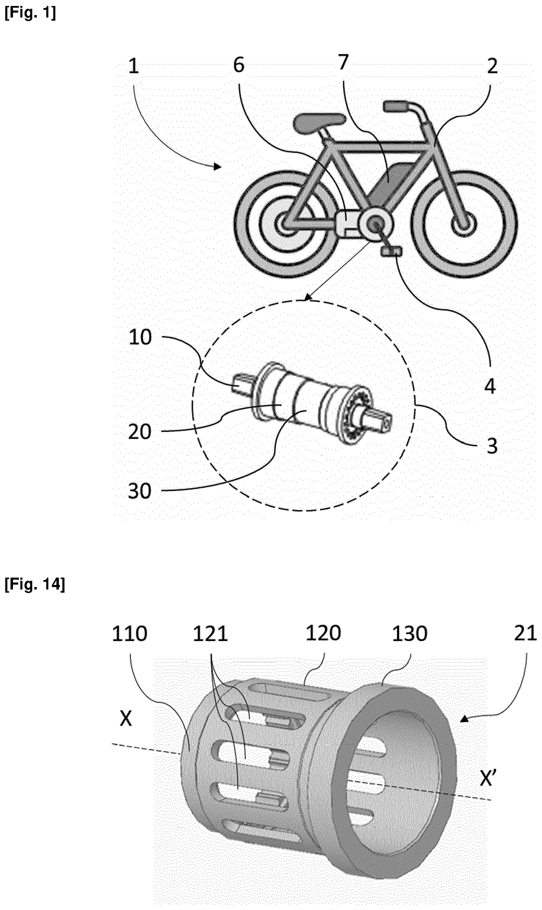

One possible solution to increase the angular deflection of the torque shaft while maintaining the extension of the axial dimensions of the torque shaft to an extent which is acceptable, could be to create axially-extending openings, namely axial grooves within tubular body of the torque shaft, to ease angular deformation in response to the applied torque. However, it will be explicated within the framework of the detailed description below with reference to **Figure 14** of the drawings, that this solution would weaken the mechanical resistance of the torque shaft by creating high tensile stress in the material of which the torque shaft is made. For this reason, such design cannot withstand overload of 600 Nm, for the torque shaft could break, and thus it is not suitable for the dedicated application.

Therefore, it is an object of the present invention to provide a torque shaft adapted for being used in combination with a torque sensor which operates by sensing the magnetic flux increase due to angular deformation of the torque shaft, and which is cheap and easy to be operatively mounted in a pedal assembly of a Pedelec bike, for instance.

It is also an object of the present invention to provide a torque shaft that has a reduced cost of manufacturing compared to torque shafts which are based on the magnetostriction principle, and that is designed to overcome the aforementioned drawbacks typically associated with known torque shafts, operating on the basis of magnetic flux increase detection.

### [Summary of Invention]

The subject application provides a torque shaft suitable for a torque sensor using a physical principle different from the magnetostriction principle and wherein, instead, torque is measured by magnetic flux increase due to angular deformation of the torque shaft, the torque shaft being nevertheless adapted to the small axial dimensions of the pedal assembly of an e-bike, namely the very short available length of torque shaft.

In a first aspect, indeed, there is proposed a torque shaft according to Claim 1, for connecting an input shaft to an output shaft, for instance in a pedal assembly which is bound to the pedals of a pedal-assisted electric bicycle, e-bike, said torque shaft having, arranged in a longitudinal direction along a longitudinal axis of the torque shaft:
- a first axial end portion which is configured for being tightly fixed to the input shaft of the pedal assembly;
- a second axial end portion which is configured for being tightly fixed to the output shaft of the pedal assembly; and,
- an elastically deformable portion extending axially between the first axial end portion and the second axial end portion and being adapted for transferring torque from the first end portion to the second end portion, namely from the input shaft to the output shaft, wherein the elastically deformable portion has a given axial length and is shaped into a serpentine such that it has a developed deformational length which is longer than said axial length.

Embodiment of the invention thus provide a torque shaft suitable for a torque sensor using a physical principle different from the magnetostriction principle and wherein, instead, torque can be measured by magnetic flux increase due to angular deformation of the torque shaft, the torque shaft being nevertheless adapted to the small axial dimensions of the pedal assembly of an e-bike.

One benefit of the invention lies in the fact that it does not require expensive magneto-strictive materials for manufacturing the torque shaft. Instead of this, cheaper materials can be employed, such as conventional steel. Other benefits of the magnetic flux increase detecting solution versus the magneto-strictive solution is that it requires simpler detection electronics, which is cheaper and more robust, and has improved resistance to external magnetic fields. Axial deformations of a magneto-strictive torque shaft creates signal offset, whereas this is not the case with the magnetic flux increase detecting solution.

Dependent claims describe specific embodiments of the subject application.

A second aspect of the invention relates to a torque sensor for a pedal-assisted electric bicycle, e-bike, adapted to be arranged in a pedal assembly of the e-bike including pedals, the torque sensor comprising a torsional torque shaft according the first aspect as defined above, and a detection unit adapted to cooperate with the torsional torque shaft to generate a signal representative of an effort exerted on the pedals, that is to say the torque that the cyclist is giving to the pedals.

A third aspect of the invention relates to a pedal assembly for a pedal-assisted electric bicycle, e-bike, comprising pedals and a torque sensor according to the second aspect as defined above, configured to control operation of an electric drive system of the e-bike which is adapted to provide electric pedal assistance, that is to say to automatically assist a user in pedaling.

Finally, a last aspect of the invention relates to a pedal-assisted electric bicycle, e-bike, comprising an electric drive system adapted to provide automatic pedal support and a pedal assembly according to the third aspect, arranged to detect an effort exerted on the pedals.

These and other aspects of the subject application will be apparent from and elucidated based on the embodiments described hereinafter.

### [Brief Description of Drawings]

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale.
Figure 1 is a schematic view of an exemplary pedal-assisted electric bicycle (also named a Pedelec Bike) with an exploded view showing part of the pedal assembly of the bicycle to which the torque shaft according to embodiments pertains.
Figure 2 is a perspective view of an embodiment of the subject torque shaft.
Figure 3 is a full section view of the torque shaft of Figure 2.
Figure 4 is a part cross-sectional view of the pedal assembly of the Pedelec bike of Figure 1 showing a torque sensor using the torque shaft of Figures 2 and 3.
Figure 5 is a half cross-sectional view showing details of the torque shaft of Figures 2 and 3.
Figure 6 is a half cross-sectional view showing a first embodiment of the elastically deformable portion of the subject torque shaft.
Figure 7 is a half cross-sectional view showing a second embodiment of the elastically deformable portion of the subject torque shaft.
Figure 8 is a half cross-sectional view showing a third embodiment of the elastically deformable portion of the subject torque shaft.
Figure 9 is a half cross-sectional view showing a fourth embodiment of the elastically deformable portion of the torque shaft.
Figure 10 is a full section view showing details of the torque shaft of Figure 9.
Figure 11 is a perspective view of a magnetic flux detector used in an angular displacement measurement device adapted to measure torque in the subject pedaling system.
Figure 12 is a perspective view of the subject pedaling system.
Figure 13 is a partial cross-sectional view of the pedaling system of Figure 12.
Figure 14 is a perspective view of an alternative solution to the embodiments as proposed herein, which could be contemplated by the one with ordinary skills in the art but is deemed by the inventors not to be suitable for fulfilling the operational requirements at stake in the application as considered here.

### [Description of Embodiments]

Because the illustrated embodiments of the subject application may for the most part, be composed of components known to the skilled person, details will not be explained in any greater extent than that considered necessary for the understanding and appreciation of the underlying concepts of the subject application, in order not to obfuscate or distract from the teachings of the subject application.

Pedelecs or EPACs (standing for *"Electric Power Assisted Cycles"*) or e-bikes, are electric bikes that are propelled with physical strength. Namely, they are equipped by pedals. Additionally, up to a speed of 25 km/h, propulsion is assisted by an electric motor with a maximum power output of 250 W. There are many different types of electric assisted bike. Basically, these e-bikes distinguish themselves by two categories, namely "Pedelecs" which are low-powered electric bicycles, on the one hand, and "Speed Pedelecs" which are higher powered pedelecs, on the other hand. The most popular and highest selling e-bike is the sub 250 W / sub 25 km/h pedelec.

Pedelecs differ very little from conventional bicycles in how they are operated. Basically, pedelecs are used much like bicycles. However, when pedaling the rider gets progressive assistance from the electric drive system.

"Speed pedelecs" (also referred to as "S-pedelecs") are no more than higher powered pedelecs, which are regulated within type approval.

In the context of the present description, there will be met with the definition of Pedelecs or S-pedelecs as pedal-assisted electric bicycles, or pedal assist "e-bikes" or just "e-bikes", with electric motors that can be ridden with pedaling, *i.e.* non-entirely electrically powered. In contrast, e-mopeds and e-scooters also run on an electric motor and need no pedaling. They usually allow higher speeds, for instance 45 km/h or more, but require registration and a driving license in some countries.

The function of this assistance is to provide a complement to pedaling. It consists of an electric drive comprising at least one electric motor, a battery unit, a controller and sensors. The sensors detect the presence of pedaling, its cadence, the effort exerted on the pedals by a user, the position of a possible gas pedal and braking. A controller integrates the parameters that qualify the behavior of the bike according to the user profile chosen by the manufacturer. It regulates current consumption and controls the motor in its various operating phases: starting, continuous operation, acceleration, etc. based on information transmitted by sensors. Depending on the model, the user usually has the possibility of switching off or dosing the level of assistance while riding, via a selector or a "gas pedal". The pedal assist e-bike type generally has more range than the throttle type because it provides power only while pedaling. In pedal assist, there is no need to hold the throttle in a certain position, and the focus is just on pedaling.

With reference to **Figure 1**, such a pedal-assisted electric bicycle 1 has an electric drive 6 with at least one electric motor whose output shaft is aligned to the pedals 4, within the pedal assembly 3, for bringing propulsion support in addition to the physical strength of the user. E-bikes are classified on the basis of the power of the electric motor on which they run. Two types of motors can be used, namely mid and hub motors. The one with ordinary skills in the art will appreciate that embodiments are not limited by the type of the electrical motor used. These bicycles use a battery unit 7 with for instance at least one chargeable batterie. Batteries have different capacities depending on their size. Batterie can be attached at different locations on the frame 2 of the bike 1.

The pedal assembly 3 is schematically represented within the details view in Figure 1. The pedal assembly 3 as shown comprises an input shaft or crank shaft 10, and an output shaft 30. The pedals 4 are tightly coupled to the input shaft 10 for transmitting the input torque provided by the pedaling of the cyclist to said input shaft. The wheels of the bike are coupled to the output shaft 30 for receiving said input torque and, such being the case, an additional torque provided by the electric drive 6 to assist the cyclist. Indeed, the output shaft 30 is further driven by at least one electric motor of the electric motor drive 6 to receive said additional torque. The wheels and, in turn, the bicycle 1, are thus driven by the input torque provided by physical strength of the cyclist through his legs muscles and, when the electric drive is operated, by the additional torque provided by the electric motor(s) of the electric drive 6.

The pedal assembly 3 further embodies an integrated torque sensor 20 which is adapted and configured to measure the input torque that the cyclist is giving to the pedals 4. The electric drive 6 is controlled based on this torque measurement, to provide progressive assistance to the cyclist. The torque sensor 20 has a detection unit which is adapted to cooperate with a torsional torque shaft arranged in the pedal assembly 3 of the bicycle 1.

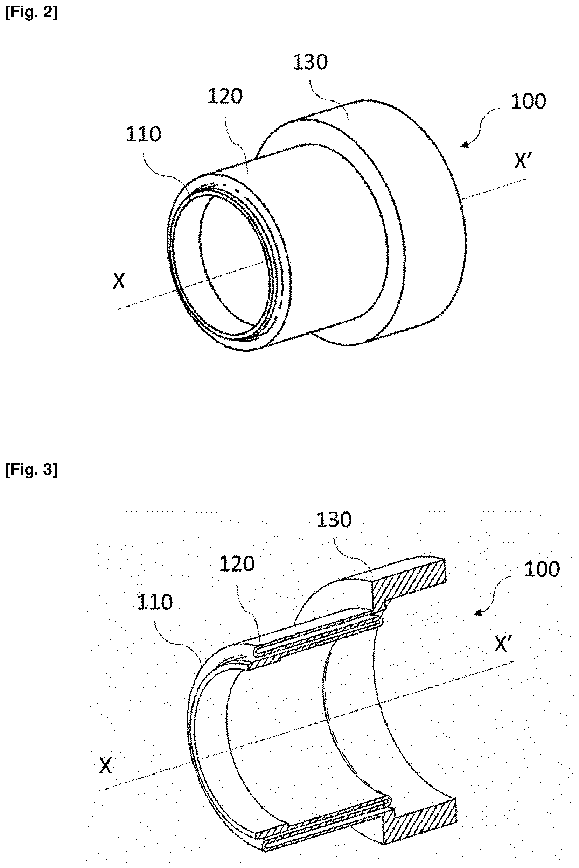

As shown in **Figure 2****,** this torque shaft 100 has the general shape of a cylindrical component with at least three mutually adjacent axial portions extending along a common longitudinal axis X-X', each of said axial portions having a respective diameter in the embodiment as shown. It will be appreciated by the one with ordinary skills in the art that aspects relating to the number and to the respective diameter of the axial portions of the torque shaft are exemplary and non-limiting.

A first axial end portion 110 of the torque shaft 100 according to the embodiment as shown in Figure 2 is configured for being tightly fixed to the input shaft 10 of the pedal assembly 3 of Figure 1, and a second axial end portion 130 which is configured for being similarly fixed to the output shaft 30 of said pedal assembly. Both the input shaft and the output shaft are rotatable, and so is the torque shaft 100. Stated otherwise, when the cyclist is pedaling during operation of the bicycle 1, the torque shaft 100 is rotated along with the input shaft 10 and the output shaft 30. The afore-mentioned aspects are conventional.

The torque shaft 100 as shown in Figure 2 further comprises an elastically deformable central portion 120 extending axially between the first axial end portion 110 and the second axial end portion 130. More specifically, this deformation portion 120 of the torque shaft 100 is resiliently angularly deformable. It has a given axial length, the term "axial" being of course to be understood with reference to the longitudinal axis X-X' of the torque shaft as shown. Said deformation portion 120 is adapted for transferring torque from the first end portion 110 to the second end portion 130, namely from the input shaft 10 to the output shaft 30 of the bicycle of Figure 1 when the torque shaft 100 is embodied within the pedal assembly 3 thereof.

The torque shaft is intended to be used in a torque sensor wherein the input torque is measured by magnetic flux increase due to angular deformation of the torque shaft. Unlike for torque sensors using a physical principle of magnetostriction, however, a limiting factor is the axial length of the elastically deformable central portion 120. Now, said axial length is constrained by the very short available axial length of the pedal assembly 3 as shown in Figure 1.

In the foregoing, the term terms "very short" should be interpreted relatively, in the context of the present description, by comparison with the axial length of e.g., the steering column of an automobile vehicle implementing an electrically assisted steering system. In such automotive application, indeed, the axial length of the steering column can be as long as one meter, for instance. There is not enough space in the contemplated application to a pedelec, wherein the deformational part of the torque shaft can be only 20-30 mm long. In order to withstand 400 Nm and reach 0,5° at minimum of torsional deformation, material should have yield strength of 2000 MPa or higher. This is not possible with known metals available for industrial applications.

As already mentioned in the introductory part of the present description, a solution which could be contemplated by the one with ordinary skills in the art would consist in forming axial grooves 121 in the central portion 120 of the torque shaft 21 as shown in **Figure 14****,** in one attempt to increase its capacity of elastic angular deformation in response to a twist moment of force (that is, a torsional torque) applied by the user when pedaling. In the shown example, there are *e.g*., ten axial grooves, which can be oblong-shaped and can be provided at regularly spaced angular positions along the periphery of the central portion 120 of the torque shaft 21, for example. The axial length of the groove, that is their length along the direction of the longitudinal axis X-X' can approximately extend from one axial end to the other axial end of the central portion 120 of the torque shaft 21. Assuming that the angular spacing between two angularly adjacent grooves is substantially equal to the angular width of each groove, the latter can be ca. 18°. Of course, many variations with respect to the example as shown in Figure 14 could be considered. However, this solution would in any case result in a more or less significantly lower mechanical resistance of the torque shaft 21, by creating high tensile stress in the material of which the torque shaft is made. As consequence, the torque shaft could break during operation as per the intended use. Thus, this design it is not suitable for obtaining 0,5° at minimum of torsional deformation for the deformational part 120 of a 20-30 mm long torque shaft while withstanding torque of 400 Nm with possible overload up to 600 Nm.

Compliance with this requirement is achieved, according to embodiments which shall now be described, through the use of a smart, more elaborated design of the torque shaft that ensures that sufficient angular deflection of the torque shaft is effectively and reliably obtained (in the range of 0,5° - 1°) albeit its limited overall axial length.

A close inspection of **Figure 3** shows that, according to embodiments, the elastically deformable portion 120, while having a given, limited axial length is shaped into a serpentine such that it has a developed deformational length which is longer than said axial length.

By a serpentine shaped elastically deformable portion 120, there is meant according to embodiments a portion 120 of the torque shaft that is narrowly winding, or tightly coiled in shape, so that the geometric trace has a higher wrap around distance (WAD), *i.e.,* a higher developed length, than its overall axial length. Thanks to such redesign of the torque shaft, much bigger angular deflection of the elastically deformable portion 120 can be achieved, laying in the range from ca. 0,5° to ca. 1°.

The subject torque shaft is thus suitable for a torque sensor using a physical principle different from the magnetostriction principle and wherein, instead, torque can be measured by magnetic flux increase due to angular deformation of the torque shaft, said torque shaft being nevertheless adapted to the small axial dimensions of the pedal assembly of an e-bike.

Advantageously, this result can be achieved without elongating the torque shaft beyond limits of the space available in the pedal assembly, nor by using expensive materials with very high yield strength, as it would be required without implementing embodiments of the invention. It will be noted, in addition, that materials with such high yield strength as 2000 MPa do not exist, or at least are not available for industrial applications.

Material used to manufacture the torque shaft is preferably a material having high elastic modulus and high enough mechanical properties, like steel, and having high yield strength, lying within the range 800-1000 MPa, for instance. This can be reached by using special stainless steels, like 17-4ph. The one with ordinary skills in the art will appreciate that other metal materials may be used, so that embodiments are not intended to be limited by such example.

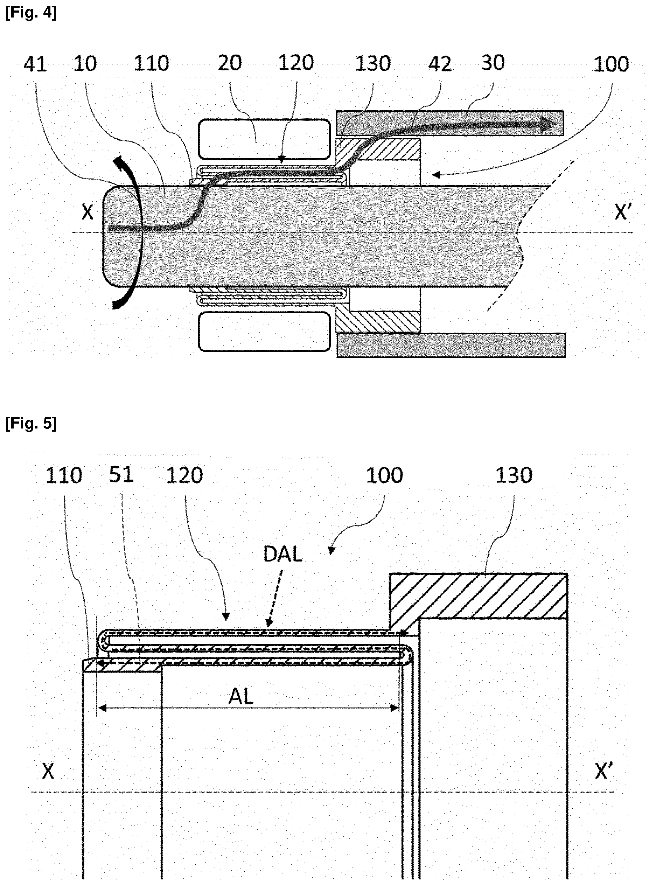

With reference to Figure 4, there is shown therein the torque shaft 100 of Figures 2 and 3, with the first axial end portion 110 mounted onto the input shaft 10 of the pedal assembly 3 of the e-bike 1 of Figure 1, and with the second axial end portion 130 mounted inside the output shaft 30 of said pedal assembly. As will be appreciated, the internal diameter of the first axial end portion 110 is substantially equal, by higher values, to the outer diameter of the input shaft 10 of the pedal assembly. Similarly, the one with ordinary skills in the art will appreciate that the output shaft 30 of the pedal assembly is a hollow tubular shaft which internal diameter is substantially equal, by higher values, to the outer diameter of the second axial end portion 130 of the torque shaft 100. The one with ordinary skills in the art will appreciate that these aspects are exemplary and non-limiting.

Such dimensions fitting allows the coupling by assembly in force, *i.e.,* force-fit of the first axial end portion 110 of the torque shaft 100 to the input shaft 10 of the pedal assembly 3, and similarly for the coupling of the second axial end portion 130 of the torque shaft 100 to the output shaft 20 of the pedal assembly 3. In preferred embodiments, however, the coupling can be done by implementation of *e.g*. spline gears, and not by force-fit.

In Figure 4, reference sign 20 designates the angular displacement measurement device, namely the torque sensor, which is annular in shape and has axial and radial dimensions suited to those of the deformation portion 120 of the torque shaft 100 so as to closely surround same, for detecting any magnetic flux increase due to angular deformation of the torque shaft 100. The torque sensor 20 comprises rotating parts, which are mounted onto the torque shaft 100, and stationary parts including the detection electronics.

The black curvilinear arrow 41 schematically represents the input torque applied on the input shaft by the cyclist through the pedals 4 as shown in Figure 1.

The grey thick arrow 42 schematically illustrates the torque transmission path from the input shaft 10 to the output shaft 30 of the pedal assembly 3, through the torque shaft 100 and specifically through its first axial end portion 110, the central deformation portion 120 and the second axial end portion 130, in that order. The design as shown in Figure 4 consists of a torque shaft that uses a deformation portion 120 having an "S" shape to transfer the torque from the input shaft 10 to the output shaft 30 (or vice versa), of the pedal assembly 3.

Turning now to **Figure 5****,** it will be appreciated that the above-mentioned torque transmission path 42 follows the serpentine shaped resiliently angularly deformable portion 120, along the dotted line 51. The torque transmission path within that deformation portion 120 has a given overall axial length (AL), and is also shaped into a serpentine such that it has a developed deformational axial length DAL (*i.e.,* a wrap around distance - WAD) which is longer than said overall axial length AL.

The embodiments exploit the theory for torsional stress and deformation, according to which the angular deformation increases with deformational length, but stress remains independent of length.

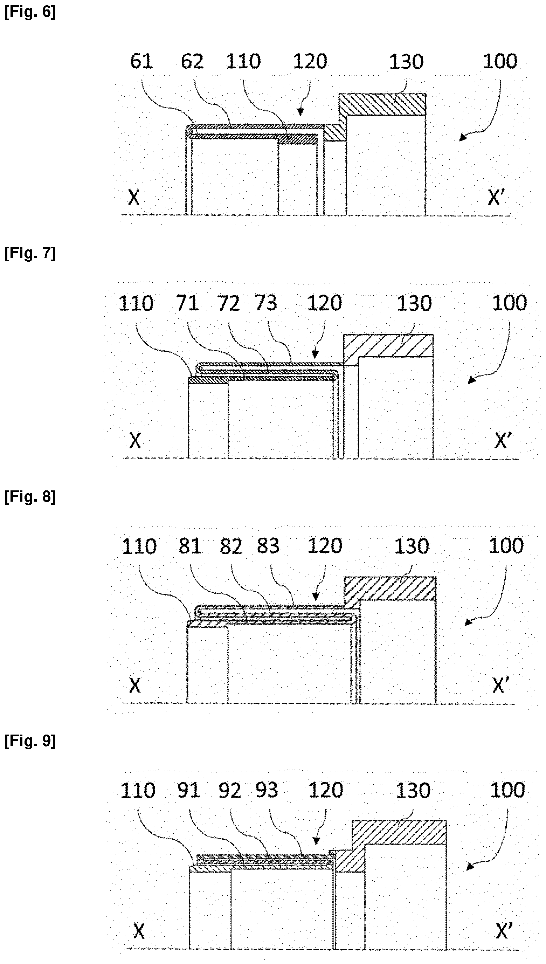

With reference now to **Figures 6** - **9****,** there will now be presented a few possible, non-limiting embodiments of the torque shaft assembly. These figures show half cross-sectional views of the torque shaft according to respective embodiments.

The idea behind all the embodiments of the invention is to create a deformation portion 120 with a longer deformational length DL within the same axial dimensions DAL of the torque shaft 100. This is conveniently achieved through the use of a deformation portion 120 of the torque shaft 100 having two or more substantially elongated segments, extending for instance substantially parallel one to the other between the first axial end portion 110 and the second axial end portion 130 of the torque shaft 100, with at least partial overlap along a radial direction, said radial direction being transverse with respect to the direction of the longitudinal axis X-X'.

It will become clear from the below description of possible embodiments that the provision of two or more substantially parallel extending segments, parallel to the direction of the longitudinal axis X-X' is only an example which, while being particularly convenient, is non-limiting of the scope of the invention. This example is convenient since it maximizes the lengthening of the deformation portion of the torque shaft within a given radial space. However, in such applications where the radial space is not a severe constraint, at least one of the segments may extend substantially radially, either outwardly or inwardly with respect to the longitudinal axis X-X' from the first axial end portion 110 toward the second axial end portion 120.

Such being the case, at least two interlinked segments can be cross-sectional segments. Segments can also be extending parallel one-to-the-other, but not parallel to the direction of the longitudinal axis X-X'.

The one with ordinary skills in the art will appreciate that, in cases where at least one segment does not extend parallel to the direction of the longitudinal axis X-X', the overlap between elongated segments along the above-mentioned radial direction which is considered according to embodiments, is the overlap of the longitudinal component, namely of the projection of the segments onto the longitudinal axis X-X', of elongated segments. In varying embodiments, the overlap thus defined can be total, or only partial.

It will be appreciated that having a plurality of elongated segments, or having only elongated segments forming the deformation portion 120 of the torque shaft 100 is not compulsory. As an alternative or additional approach, indeed, the deformation portion 120 of the torque shaft may be, at least partially, substantially sinusoidal in shape, for instance, thus not having any substantially elongated segment. The expression "at least partially" refers to the fact that only a part of the developed length of the deformation portion 120 may be sinusoidal in shape.

The proposed new torque shaft design of **Figure 6** consists of a single piece, whose deformation portion 120 can have a deformational length increased by nearly two times, by the use of a "U" band shaped deformation portion 120. Indeed, the deformation portion 120 comprises two elongated segments 61 and 61 extending parallel one-to-the-other, with at least partial overlap along a radial direction, said radial direction being transverse with respect to the longitudinal axis.

In the shown example, the two mutually parallel extending segments 61 and 62 extend parallel to the direction of the longitudinal axis X-X', but this is not a requirement. This embodiment in convenient with respect to the arrangement of the angular displacement measurement device 20 of the torque sensor as shown in Figure 4, but alternative implementations can be considered without departing from the scope of the invention.

Further, a plurality of such U-shaped deformation units can be arranged in different configurations, for instance with two U-shaped deformation units forming an S-shaped deformation portion 120. In all cases, the axial length of the deformation portion remains the same but the deformational length increases.

Thus, referring to **Figure 7****,** the embodiment shown therein comprises three elongated segments 71, 72 and 73 extending parallel one-to-the-others with at least partial overlap along the radial direction transverse to the direction of the longitudinal axis X-X', and extending parallel to said longitudinal axis, this yielding in a torque shaft 100 having an S-shaped deformation portion 120. In this example, the length of the deformation portion 120, namely the deformational length of the torque shaft 100 is increased by nearly three times.

The one with ordinary skills in the art will appreciate that, depending on the peculiars of any specific application, the elongated segments may extend radially or axially. In the former case, the torque shaft is relatively easier to produce by machining. In the latter case, mounting by welding, e.g. laser welding may be necessary. The design can be manufactured with different technics, and so it can be constructed in a one-piece or in a multiple-pieces design.

It will be recalled, further, that the different segments are not necessarily extending parallel one-to-the-other. They can be cross-sectional segments, exhibiting for instance a V-shape (when two segments are used) or a poly-V shape (when an even number of segments greater than two are used). For example, there could be a small angle, e.g. between 5 and 30 degrees, preferably 10 degrees, between the respective directions of two interlinked elongated segments. Various designs can be employed, alone or in any appropriate combination, in this respect.

In the examples of Figures 6 and 7, two parallel extending segments 61-62 and parallel extending segments 71-73, respectively, are formed integrally with the first axial end portion 110 of the torque shaft member 100. The segments of the duo of segments 61 - 62 and the segments of the trio of segments 71-73, respectively, are interlinked and extend head to tail, from the first axial end portion 110 to the second axial end portion 130 of the torque shaft member 100. Stated otherwise, the first segment 61 or 71, respectively, is fixed to the first axial end portion 110, and the last segment 62 or 73, respectively, is fixed to the second axial end portion 130 of the torque shaft member 100, for instance by welding, e.g. laser welding. In the embodiment of Figure 7, the middle segment 72 is similarly fixed between the first segment 71 and the last, third segment 73. And so would be any additional segment, should any embodiment incorporate more than three interlinked segments.

Referring now to **Figure 8****,** there is shown therein an alternative embodiment wherein three interlinked elongated segments 81, 82 and 83 are integral one to the others, and integral to both the first axial end portion 110 and the second axial end portion 130. In other words, the elongated, for instance longitudinally extending segments 81, 82 and 83 are integral to the axial end portions of the torque shaft member 100 as a whole. Such relatively complex structure can be obtained by 3D metal-printing, for instance.

In the embodiment as shown in **Figure 9****,** the deformation portion 120 is made of several elongated segments, interlinked one-to-the-other, which can be assembled head to tail by welding. In the shown embodiment, only one segment 91 is made integral with the first end portion 110 of the torque shaft 100. The two other segments 92 and 93 are welded one-to-the-other, the segment 92 being welded to the first segment 91, and the last segment 93 being welded to the second axial end portion 130 of the torque shaft 100, so as to form a longitudinally extending chain of elongated segments 91-93 which connects the first axial end portion 110 to the second axial end portion 130.

In each of the embodiments as shown in Figures 6, 7, 8 and 9, the elongated segments of groups of segments 61-62, 71-73, 81-83 and 91-93, respectively, extend substantially parallel one-to-the-other, and parallel to the direction of the longitudinal axis X-X'. Further, they substantially fully overlap along a radial direction, said radial direction being transverse with respect to the longitudinal axis X-X'. That way, the total longitudinal space requirement of the segments is relatively small, since it amounts to *ca.* the longitudinal length of one single segment (assuming that all segments are of substantially equal length).

It will be noted, however, that neither one of these features is mandatory. On the contrary, at least one or some of the segments in the groups of segments 61-62, 71-73, 81-83 and 91-93, respectively, may extend with a slight angle, *e.g*. 10 degrees, with respect to the direction of the longitudinal axis X-X', and at least some segments of each of said groups of segments can be cross-sectional segments. Also, the overlap of parallel extending elongated segments along the above-mentioned radial direction, or the overlap of the longitudinal component (that-is-to say, of the projection of the segments onto the longitudinal axis X-X') of elongated segments may be partial only. There can also be no such overlap at all, though an overlap allows lengthening the developed axial dimension of the deformation portion 120, *i.e.,* the deformational length of the torque shaft 100.

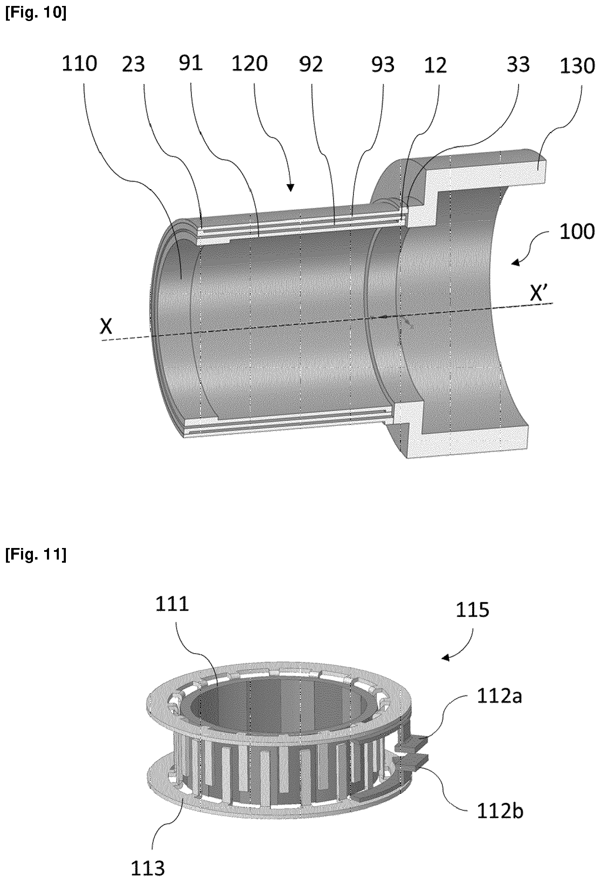

Details of the torque shaft of Figure 9 are presented in the full section view of **Figure 10****.** This Figure shows welding beads 12, 23 and 33 which connect the first segment 91 to the second segment 92, the second segment 93 to the third segment 93, and said third segment to the second axial end portion 130, respectively, of the torque shaft 100. It is recalled that, in the shown embodiments, the first segment 91 is made integral to the first axial end portion 110.

The one with ordinary skills in the art will appreciated that the welding beads 12, 23 and 33 are preferably annular. Stated otherwise, they connect the two welded pieces all around 360°.

To summarize, the torque shaft according to embodiments can be manufactured by machining a raw tubular piece of metal, by forging, deep drawing, metal sintering, 3D metal-printing, and/or (laser) welding for soldering stand-alone pieces all together. It will be appreciated that the invention is not intended to be limited by any specific production method(s), and that the one skilled in the art may select one or more manufacturing techniques to adapt any particular situation.

The torque shaft described in the foregoing description is capable of withstanding high torque loads (e.g., in the range of 400 Nm) and have relatively large torsional deformations, *i.e.,* from ca. 0,5° to ca. 1°, for instance.

**Figure 11** is a perspective view of a magnetic flux detector which can be used in an angular displacement measurement device adapted to measure torque in the pedaling system according to another aspect of the invention. As shown in this Figure, the magnetic flux detector 115 comprises:
- a rotating magnet ring 111 connected to the first axial end portion 110 of torque shaft 100. In the shown embodiment, the magnet ring comprises eight pairs of juxtaposed magnets of alternate magnetic polarities;
- a rotating stator 113 which is adapted for being connected to the second axial end portion 130 of torque shaft 100, and which comprises two rings with interleaved fingers; and,
- stationary magnetic flux collectors 112a and 112b which are connected with the detection electronics of the torque sensor. An increase in the detected magnetic flux is interpreted as an increase in the input torque exercised by the cyclist through the pedals 4 of the e-bike 1. Thus, the detection electronics is configured to command an increase in the electric motor driven assistant in pedaling, as a result of such detection. Conversely, as the detected magnetic flux decreases, the detection electronics is configured to determine that the cyclist needs less additional torque and so the assistance is down controlled.

For more information about structure and operation of such a magnetic flux detector, the one with ordinary skills in the art may refer to patent documents EP1269133 B1, WO2020174171 A1 filed by MOVING MAGNET TECHNOLOGIES, a French Company.

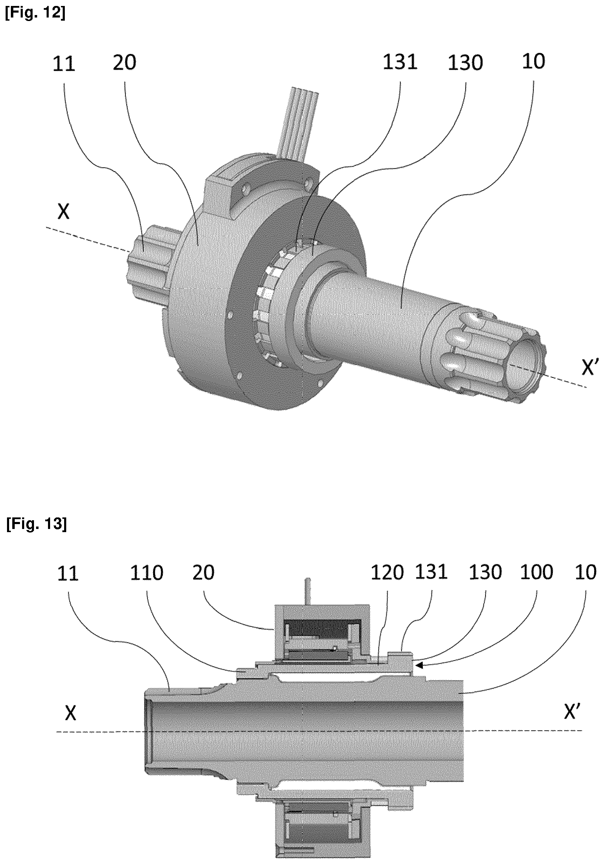

Turning now to **Figure 12** there is shown therein a perspective view of the subject pedaling system. **Figure 13** is a partial cross-sectional view of the pedaling system of Figure 12. These Figures are largely self-explanatory and thus are not described in detail hereinafter.

The one with ordinary skills in the art with appreciate that, as shown in these Figures, the input shaft 10 has male spline connections 11 at both of its axial ends, for the coupling of the pedals 4 to said input shaft 10. Also, it can be seen that the outer face of the second end portion 130 of the torque shaft 100 bears one-way clutch teeth forming a one-way clutch gear for the engagement of the electric assistance motor.

It is not considered necessary to make this description more extensive so that any expert in the field understands the scope of the invention and the advantages derived from it.

The materials, shape, size and arrangement of the elements will be subject to variation provided that this does not imply an alteration in the essentiality of the invention.

The terms in which this description has been drawn-up must always be taken in a broad and non-limited sense.

The corresponding structures, materials, acts, and equivalents of all means or operation plus function elements in the claims below are intended to include any structure, material, or act for performing the function in combination with other claimed elements as specifically claimed.

The description of the subject application has been presented for purposes of illustration and description but is not intended to be exhaustive or limited to the application in the form disclosed. The embodiments were chosen and described to best explain the principles of the application and the practical application, and to enable the skilled person to understand the application for various embodiments with various modifications as are suited to the particular use contemplated.

## Claims

1. Torque shaft (100) for connecting an input shaft (10) to an output shaft (30), for instance in a pedal assembly (3) which is bound to the pedals (4) of a pedal-assisted electric bicycle, e-bike, said torque shaft having, arranged in mutually adjacent respective positions along the direction of a longitudinal axis (X-X') of the torque shaft:
- a first axial end portion (110) which is configured for being tightly fixed to the input shaft of the pedal assembly;
- a second axial end portion (130) which is configured for being tightly fixed to the output shaft of the pedal assembly; and,
- a resiliently angularly deformable portion (120) extending axially between the first axial end portion and the second axial end portion and being adapted for transferring torque from the first end portion to the second end portion, namely from the input shaft to the output shaft,
wherein the resiliently angularly deformable portion has a given overall axial length and is shaped into a serpentine such that it has a developed deformational length which is longer than said overall axial length.

2. Torque shaft according to Claim 1, wherein the deformation portion comprises at least two substantially elongated segments extending substantially parallel one-to-the-other, with at least partial overlap along a radial direction, said radial direction being transverse with respect to the longitudinal axis.

3. Torque shaft according to Claim 2, wherein at least two mutually parallel extending segments extend parallel to the direction of the longitudinal axis.

4. Torque shaft according to Claim 1, wherein at least two segments extend in respective cross directions.

5. Torque shaft according to Claim 4, wherein at least one segment of the two mutually cross extending segments extends parallel to the longitudinal axis.

6. Torque shaft according to any one of Claims 4 and 5, wherein at least one segment of the two mutually cross extending segments extends in a radial direction with respect to the longitudinal axis.

7. Torque shaft according to any one of Claims 2 through 6, wherein at least some of the segments are welded end-to-end, one of them being coupled, for instance by welding, to the first axial end portion and another one being coupled to the second axial end portion.

8. Torque shaft according to any one of Claims 3 through 7, wherein the segments are integral one to the others, and are integral to at least one (110) of the first axial end portion (110) and second axial end portion (120).

9. Torque shaft according to any one of Claims 3 through 7, wherein the segments are integral one to the others, and are integral to the torque shaft (100) as a whole.

10. Torque sensor for e.g., a pedal-assisted electric bicycle, e-bike, which is adapted to be arranged in a pedal assembly of the e-bike including pedals, the torque sensor comprising:
- a torsional torque shaft according to any one of claims 1 through 9 coupling an input shaft and an output shaft of the pedal assembly, and,
- an angular displacement detection unit adapted to cooperate with the torsional torque shaft to generate a signal representative of an effort exerted on the pedals.

11. Pedal assembly for a pedal-assisted electric bicycle, e-bike, comprising pedals and a torque sensor according to Claim 10 configured to control operation of an electric drive system of the e-bike which is adapted to provide automatic pedal support.

12. Pedal-assisted electric bicycle, e-bike, comprising an electric drive system adapted to provide automatic pedal support and a pedal assembly according to Claim 11 arranged to detect an effort exerted on the pedals.
